# EUROPÄISCHE PATENTANMELDUNG

(11) **EP 2 083 184 A2**
(43) Veröffentlichungstag der Anmeldung: **29.07.2009**
(21) Anmeldenummer: 08019179.4
(22) Anmeldetag: 03.11.2008
(51) Int. Cl.: F16D 25/12

(54) **Hydrauliksystem einer Kupplung eines Kraftfahrzeuggetriebes**

(30) Priorität: 26.01.2008 DE 102008006165
(71) Anmelder: Dr.Ing. h.c. F. Porsche Aktiengesellschaft, 70435 Stuttgart (DE)
(72) Erfinder: Niko, Michael, 71701 Schwieberdingen (DE); Esser, Joachim, 71277 Rutesheim (DE); Baur, Peter, 71297 Moensheim (DE); Krüger, Arne, 76139 Karlsruhe (DE)

(57) **Zusammenfassung**

Vorgestellt wird ein Hydrauliksystem (10) einer Kupplung (12) eines Kraftfahrzeuggetriebes (14), mit einer Pumpe (16), die einen Hydraulikflüssigkeitsstrom (i_ATF) über einen Wärmetauscher (18) zu einem steuerbaren Hydraulikventil (20) fördert, das den Hydraulikflüssigkeitsstrom (i_ATF) in einen ersten Teilstrom (i_ATF_1) und einen zweiten Teilstrom (i_ATF_2) aufteilt, von denen der erste Teilstrom (i_ATF_1) über Reibbeläge der Kupplung (12) zu einem Vorratsbehälter (22) strömt und der zweite Teilstrom (i_ATF_2) über einen die Reibbeläge umgehenden Hydraulikpfad (24) zu dem Vorratsbehälter (22) strömt, wobei das Hydrauliksystem (10) dazu eingerichtet ist, eine Kühlung der Kupplung (12) durch zu Lasten des zweiten Teilstroms (i_ATF_2) erfolgendes Vergrößern des ersten Teilstroms (i_ATF_1) aufzusteuern und die Kühlung der Kupplung (12) durch zu Lasten des ersten Teilstroms (i_ATF_1) erfolgendes Vergrößern des zweiten Teilstroms (i_ATF_2) zu verringern. Das Hydrauliksystem zeichnet sich dadurch aus, dass es dazu eingerichtet ist, die Kühlung der Kupplung (12) bei einem Umsteuern der Drehmomentübertragung von einer Übertragung über ein erstes Teilgetriebe (TG1) auf eine Übertragung über ein zweites Teilgetriebe (TG2) des Kraftfahrzeuggetriebes (14) vorübergehend aufzusteuern.

## Beschreibung

Die Erfindung betrifft ein Hydrauliksystem einer Kupplung eines Kraftfahrzeuggetriebes nach dem Oberbegriff des Anspruchs 1. Ein solches Hydrauliksystem ist aus der DE 10 2005 013 137 A1 bekannt.

Es weist eine Pumpe auf, die einen Hydraulikflüssigkeitsstrom über einen Wärmetauscher zu einem steuerbaren Hydraulikventil fördert. Das Hydraulikventil teilt den Hydraulikflüssigkeitsstrom in einen ersten Teilstrom und einen zweiten Teilstrom auf. Der erste Teilstrom strömt über Reibbeläge der Kupplung zu einem Vorratsbehälter und der zweite Teilstrom strömt über einen die Reibbeläge umgehenden Hydraulikpfad zu dem Vorratsbehälter. Das bekannte Hydrauliksystem ist dazu eingerichtet, eine Kühlung der Kupplung durch zu Lasten des zweiten Teilstroms erfolgendes Vergrößern des ersten Teilstroms aufzusteuern und die Kühlung der Kupplung durch zu Lasten des ersten Teilstroms erfolgendes Vergrößern des zweiten Teilstroms zu verringern.

Das in der DE 10 2005 013 137 A1 als Umschaltventil bezeichnete Hydraulikventil ist dabei in einem Niederdruckzweig zwischen einem Ölkühler auf der einen Seite und der als Anfahrelement dienenden Kupplung und Elementen einer Getriebeschmierung auf der anderen Seite angeordnet. Es steuert die Verteilung eines aus dem Kühler austretenden Kühlölstroms auf eine zu den Elementen der Getriebeschmierung führenden Ölleitung und eine zu Elementen der Anfahrelementkühlung abgehenden Ölleitung.

Bezüglich der Ansteuerung des Umschaltventils werden bei dem bekannten Hydrauliksystem drei Betriebsarten unterschieden. In einer ersten Betriebsart wird bei abgeschaltetem Fahrzeugantriebsmotor eine elektrische Ölpumpe angetrieben und das Umschaltventil derartig betätigt, dass die Schmierölversorgung des Getriebes und die Kühlölversorgung des Anfahrelementes zumindest größtenteils unterbunden ist. In einer zweiten Betriebsart, bei der das Fahrzeug anfährt, werden eine mechanische und eine elektrische Ölpumpe parallel angetrieben und das Umschaltventil zur Kühlölversorgung des Anfahrelementes im Wesentlichen geöffnet. In einer dritten Betriebsart ist vorgesehen, dass die mechanische Ölpumpe angetrieben wird und die elektrische Ölpumpe stillsteht, wobei das Umschaltventil zur Schmierölversorgung des Getriebes geöffnet ist und zur Kühlölversorgung des Anfahrelementes im Wesentlichen geschlossen ist. Die dritte Betriebsart.ist ferner dadurch charakterisiert, dass sich das Fahrzeug längere Zeit nach einem Anfahrvorgang mit mittlerer oder hoher Fahrmotordrehzahl in schneller Fahrt befindet, so dass die mechanisch antreibbare Pumpe alle Verbraucher im Ölversorgungssystem ausreichend versorgen kann und eine Nachkühlung des Anfahrelementes nur noch in geringem Umfang erfolgt.

An anderer Stelle heißt es in der DE 10 2005 013 137 A1, dass der Bedarf an Kühlflüssigkeit für die Fahrkupplung gerade bei Anfahrvorgängen besonders groß sei, während bei Schaltvorgängen des Getriebes während der Fahrt zumeist nur relativ geringe Belastungen an der Fahrkupplung auftreten würden. Insgesamt vermittelt die DE 10 2005 013 137 A damit die Lehre, einen Kühlölstrom nur beim Anfahren, nicht aber beim Schalten bereitzustellen.

Ferner sind Hydrauliksysteme für Automatikgetriebe mit einem Drehmomentwandler als Anfahrelement bekannt, bei dem der gesamte Ölstrom des Getriebes durch einen Ölkühler geführt und damit gekühlt wird.

Bekannt sind ferner Doppelkupplungsgetriebe für Kraftfahrzeuge. Solche Doppelkupplungsgetriebe bestehen in der Regel aus zwei Teilgetrieben, die abtriebsseitig auf die gleiche Welle wirken und antriebsseitig jeweils über eine für jedes Teilgetriebe individuelle Kupplung mit einem Antriebsmotor verbunden werden können. Diese Doppelkupplungsgetriebe zeichnen sich unter anderem dadurch aus, dass sie ohne Zugkraftunterbrechung schaltbar sind, wobei das Drehmoment vor dem Schaltvorgang über eine der Kupplungen und das zugeordnete Teilgetriebe übertragen wird und nach dem Schaltvorgang über die andere Kupplung und das zugeordnete andere Teilgetriebe übertragen wird. Diese Doppelkupplungsgetriebe werden bevorzugt bei leistungsstarken Fahrzeugen eingesetzt. Es hat sich gezeigt, dass die bei der DE 10 2005 013 137 A1 vorausgesetzte Annahme, dass bei Schaltvorgängen des Getriebes während der Fahrt zumeist nur relativ geringe Belastungen an der Fahrkupplung auftreten, bei Doppelkupplungsgetrieben in leistungsstarken Fahrzeugen nicht immer zutrifft.

Vor diesem Hintergrund besteht die Aufgabe der Erfindung in der Angabe eines für leistungsstarke, mit einem Doppelkupplungsgetriebe ausgerüstete Fahrzeuge eingerichteten Hydrauliksystems der eingangs genannten Art.

Diese Aufgabe wird durch die Merkmale des Anspruchs 1 gelöst.

Von dem Stand der Technik nach der DE 10 2005 013 137 A1 unterscheidet sich das erfindungsgemäße Hydrauliksystem dadurch, dass es dazu eingerichtet ist, die Kühlung der Kupplung bei einem Umsteuern der Drehmomentübertragung von einer Übertragung über ein erstes Teilgetriebe auf eine Übertragung über ein zweites Teilgetriebe des Kraftfahrzeuggetriebes vorübergehend aufzusteuern. Dadurch kann der beim Umsteuern der Drehmomentübertragung durch Schlupf an den beiden beteiligten Kupplungen auftretende Wärmeeintrag in die Hydraulikflüssigkeit bedarfsgerecht abgeführt werden.

Gleichzeitig werden durch die bedarfsgerechte Aufsteuerung des Hydraulikventils unerwünschte Nebenwirkungen, die bei einer permanenten Durchströmung der Doppelkupplung auftreten können, auf ein zu Kühlzwecken in Kauf zu nehmendes Maß beschränkt. Zu diesen unerwünschten Nebenwirkungen gehört eine Verschäumung der Hydraulikflüssigkeit und ein Auftreten von Schleppmomenten.

Bei der Durchströmung der Doppelkupplung wird die Hydraulikflüssigkeit insbesondere bei hohen Drehzahlen von den rotierenden Kupplungsbauteilen, zum Beispiel den Lamellen, abgeschleudert. Dabei kann die unerwünschte Ölschaumbildung auftreten.

Außerdem würde eine permamente Durchströmung Schleppmomente vergrößern. Dies gilt insbesondere bei Doppelkupplungsgetrieben, da diese bereits ein Einlegen eines Ganges in einem zweiten Teilgetriebe erlauben, während die Drehmomentübertragung zwischen Antriebsmotor und Getriebeausgang noch über das erste Teilgetriebe erfolgt. Der in dieser Situation im zweiten Teilgetriebe vorgewählte und eingelegte Gang wird auch als Schattengang bezeichnet. Die Kupplung des zweiten Teilgetriebes wird in diesem Fall von dem gemeinsamen Getriebeausgang angetrieben und erfährt durch die Durchströmung ein Schleppmoment, das die an den Rädern des Fahrzeugs wirksame Leistung verringert (beobachtet wurden bei einem bestimmten Motor 0,3 bis 0,5 KW Verlustleistung bei 1500 min⁻¹) und den Verbrauch erhöht.

Durch diese Schleppmomente würde ferner das Einlegen des Schattengangs erschwert, da das von der Durchströmung erzeugte, an der zugehörigen Kupplung wirksame Schleppmoment die Synchronisierung erschwert. Langfristig würde dies ferner zu einem schnelleren Verschleiß der Synchronisationseinrichtung führen.

Eine besonders bevorzugte Ausgestaltung sieht daher vor, dass das Hydrauliksystem dazu eingerichtet ist, eine Kühlung der Kupplung beim Vorwählen einer bestimmten Übersetzung im aktuell kein Drehmoment übertragenden Teilgetriebe, also beim Einlegen des Schattengangs, abzusteuern oder nicht aufzusteuern.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein Ausführungsbeispiel eines Hydrauliksystems einer Kupplung eines Kraftfahrzeuggetriebes; und
- Fig. 2: eine konkretere Ausgestaltung eines Merkmale der Erfindung aufweisenden Hydraulikkreislaufs.

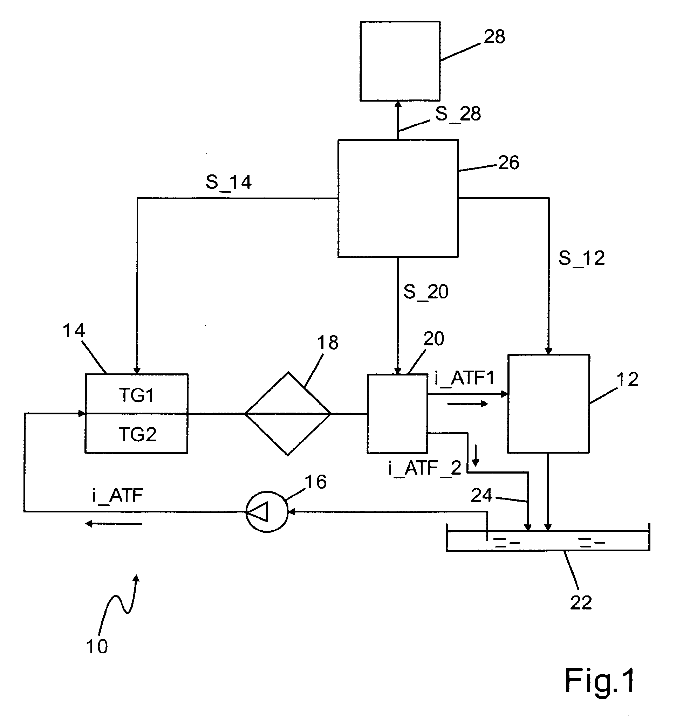

Die Fig. 1 zeigt im Einzelnen ein Hydrauliksystem 10 einer Doppelkupplung 12 eines Doppelkupplungsgetriebes als Kraftfahrzeuggetriebe 14. Das Hydrauliksystem 10 weist eine Pumpe 16 auf, die einen Hydraulikflüssigkeitsstrom i_ATF über einen Wärmetauscher 18 zu einem steuerbaren Hydraulikventil 20 fördert. Die Pumpe 16 saugt die Hydraulikflüssigkeit ATF aus einem Vorratsbehälter 22, setzt sie unter einen bestimmten Druck und speist den Hydraulikflüssigkeitsstrom i_ATF in das Doppelkupplungsgetriebe 14, das zwei Teilgetriebe TG1, TG2 aufweist. Im Doppelkupplungsgetriebe 14 dient die Hydraulikflüssigkeit ATF zur Schmierung, Kühlung und Steuerung. Die Steuerung erfolgt dadurch, dass der Druck der Hydraulikflüssigkeit zur Betätigung von Gangstellern genutzt wird, mit denen Übersetzungen innerhalb der Teilgetriebe geändert werden.

Nach dem Austreten aus dem Doppelkupplungsgetriebe 14 wird der Hydraulikflüssigkeitsstrom i_ATF durch den Wärmetauscher 18 geführt. Der Wärmetauscher 18 ist in einer Ausgestaltung als Öl-Wasser-Wärmetauscher realisiert, der von der Kühlflüssigkeit des Antriebsmotors des Kraftfahrzeugs durchströmt wird. Auf diese Weise wird die Temperatur der Hydraulikflüssigkeit an die Temperatur der Kühlflüssigkeit angeglichen. Der aus dem Wärmetauscher 18 austretende Hydraulikflüssigkeitsstrom wird anschließend vom Hydraulikventil 20 in einen ersten Teilstrom i_ATF_1 und einen zweiten Teilstrom i_ATF_2 aufgeteilt.

Die Reihenfolge von Doppelkupplungsgetriebe 14 und Wärmetauscher 18 kann in Bezug auf die Durchströmung mit Hydraulikflüssigkeit auch umgekehrt sein. Wesentlich ist dagegen, dass die Aufteilung des Hydraulikflüssigkeitsstroms i_ATF durch das Hydraulikventil 20 in einen ersten Teilstrom i_ATF_1 und einen zweiten Teilstrom i_ATF_2 erst nach der Durchströmung des Doppelkupplungsgetriebes 14 erfolgt.

Der erste Teilstrom i_ATF_1 strömt über in der Regel als Lamellen ausgestaltete Reibbeläge der Doppelkupplung 12 zu dem Vorratsbehälter 22. Der zweite Teilstrom i_ATF_2 strömt über einen die Reibbeläge umgehenden Hydraulikpfad 24 zu dem Vorratsbehälter 22.

Die Aufteilung des Hydraulikflüssigkeitsstroms i_ATF auf den ersten Teilstrom i_ATF_1 und den zweiten Teilstrom i_ATF_2 erfolgt dabei so, dass das Verhältnis beider Teilströme i_ATF_1, i_ATF_2 nicht konstant ist, sondern vom Hydraulikventil 20 bedarfsgerecht variiert wird. Dazu ist das Hydrauliksystem 10 insbesondere dazu eingerichtet, die Aufteilung so vorzunehmen dass eine Kühlung der Kupplung 12 durch zu Lasten des zweiten Teilstroms i_ATF_2 erfolgendes Vergrößern des ersten Teilstroms i_ATF_1 aufgesteuert wird und durch zu Lasten des ersten Teilstroms i_ATF_1 erfolgendes Vergrößern des zweiten Teilstroms i_ATF_2 abgesteuert wird.

Dazu wird das Hydraulikventil 20 von einem Steuergerät 26 mit Stellsignalen S_20 insbesondere so angesteuert, dass die Kühlung der Kupplung 12 bei einem Umsteuern der Drehmomentübertragung von einer Übertragung über ein erstes Teilgetriebe TG1 auf eine Übertragung über ein zweites Teilgetriebe TG2 des Kraftfahrzeuggetriebes 14 vorübergehend aufgesteuert wird.

Bei dem Steuergerät 26 handelt es sich je nach Ausgestaltung um ein Steuergerät, das auch den Verbrennungsmotor 28 mit Stellsignalen S_28, das Doppelkupplungsgetriebe 14 mit Stellsignalen S_14 und die Kupplung 12 mit Stellsignalen S_12 steuert, oder um ein Steuergerät, das nur eine Teilmenge dieser Komponenten, im Extremfall allein das Hydraulikventil 20, steuert. Wenn zur Steuerung der genannten Komponenten mehrere Steuergeräte verwendet werden, sind diese in der Regel über ein Bussystem miteinander verbunden, das alle für die Steuerung des Hydraulikventils 20 erforderlichen und in einem der Steuergeräte vorliegenden Informationen verfügbar macht.

Eine besonders bevorzugte Ausgestaltung des Hydrauliksystems 10 zeichnet sich dadurch aus, dass es dazu eingerichtet ist, eine Kühlung der Kupplung 12 beim Vorwählen einer bestimmten Übersetzung im aktuell kein Drehmoment übertragenden Teilgetriebe abzusteuern oder nicht aufzusteuern. Dadurch wird der beim Einlegen des neuen Ganges im betroffenen Teilgetriebe erforderliche Synchronisationsvorgang, mit dem unter anderem die Drehzahl des getriebeseitigen Teils der Kupplung des betroffenen Teilgetriebes an die Fahrgeschwindigkeit angepasst wird, nicht gestört. Wie bereits erwähnt wurde, würde ein Hydraulik-Flüssigkeitsstrom über die betroffene Kupplung störende Schleppmomente erzeugen, die eine Synchronisation erschweren würden.

Die Erfindung erlaubt es insbesondere, den Wärmetauscher 18 zur optimalen Kühlung des Doppelkupplungsgetriebes 14 stets mit dem größtmöglichen Hydraulikflüssigkeits-Volumenstrom i_ATF zu durchströmen, ohne diesen Volumenstrom i_ATF ständig über die Kupplung 12 abführen zu müssen. Die Anordnung des Hydraulikventils 20 zwischen dem Wärmetauscher 18 auf der einen Seite und der Kupplung 12 sowie dem Vorratsbehälter 22 auf der anderen Seite eröffnet die Möglichkeit, den potenziell kühlenden Hydraulikflüssigkeitsstrom i_ATF bedarfsweise komplett in die Kupplung 12 strömen zu lassen (i_ATF = i_ATF_1). Alternativ kann der Hydraulikflüssigkeitsstrom i_ATF dann, wenn kein Kühlbedarf für die Kupplung 12 besteht oder wenn Schleppmomente reduziert oder vermieden werden sollen, komplett an der Kupplung 12 vorbei in den Vorratsbehälter 22 geleitet werden (i_ATF = i_ATF_2). Je nach Ausführung des Hydraulikventils 20 sind auch zwischen diesen Extremfällen liegende Aufteilungen mit i_ATF = i_ATF_1 + i_ATF_2 und i_ATF_1 ungleich 0 und gleich oder ungleich i_ATF_2 möglich.

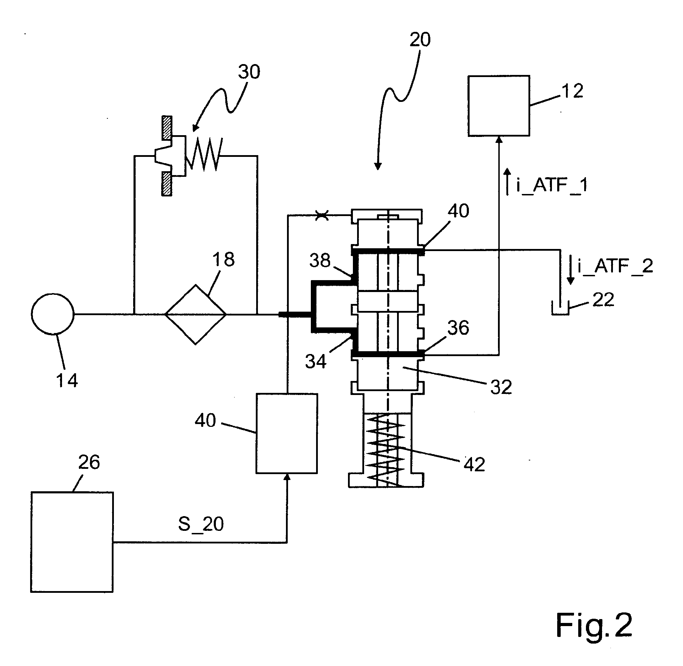

Fig. 2 zeigt eine konkretere Ausgestaltung eines Merkmale der Erfindung aufweisenden Hydraufikkreistaufs. Dabei bezeichnen gleiche Bezugszeichen in den Figuren 1 und 2 jeweils gleiche Elemente. Bei der Ausgestaltung der Fig. 2 liegt ein Bypassventil 30 parallel zu dem Wärmetauscher 18, um einen Druckabfall über dem Wärmetauscher 18 zu begrenzen. Das Hydraulikventil 20 weist einen federbelasteten Steuerkolben 32 auf, der je nach Auslenkung aus seiner Ruhelage einen ersten Strömungspfad zwischen einem ersten Eingang 34 und einem ersten Ausgang 36 und/oder einen zweiten Strömungspfad zwischen einem zweiten Eingang 38 und einem zweiten Ausgang 40 öffnet oder sperrt. Der Steuerkolben 32 wird von einem Druckstellglied 40 betätigt, das seinerseits elektrisch durch das Steuergerät 26 mit Stellsignalen S_20 gesteuert wird.

Ohne Ansteuerung drückt die Feder 42 den Steuerkolben 32 nach oben. In dieser Stellung wird der erste Strömungspfad geöffnet und der zweite Strömungspfad geschlossen. Der gesamte Hydraulikflüssigkeitsstrom i_ATF fließt über den ersten Strömungspfad und im Folgenden an der Kupplung 12 vorbei in den Vorratsbehälter 22. Bei voller Ansteuerung wird der Steuerkolben gegen die Federkraft nach unten gedrückt. Der erste Strömungspfad wird dabei verschlossen, während der zweite Strömungspfad voll aufgesteuert wird. Der gesamte Hydraulikflüssigkeitsstrom i_ATF wird im Folgenden über die Kupplung 12 geleitet. Durch entsprechende Ansteuerung des Druckstellgliedes, beispielsweise mit einem pulsweitenmodulierten Signal, lassen sich zumindest im zeitlichen Mittel beliebige Aufteilungen des Hydraulikflüssigkeitsstroms auf die beiden Teilströme i_ATF_1 und i_ATF_2 einstellen.

## Patentansprüche

1. Hydrauliksystem (10) einer Kupplung (12) eines Kraftfahrzeuggetriebes (14), mit einer Pumpe (16), die einen Hydraulikflüssigkeitsstrom (i_ATF) über einen Wärmetauscher (18) zu einem steuerbaren Hydraulikventil (20) fördert, das den Hydraulikflüssigkeitsstrom (i_ATF) in einen ersten Teilstrom (i_ATF_1) und einen zweiten Teilstrom (i_ATF_2) aufteilt, von denen der erste Teilstrom (i_ATF_1) über Reibbeläge der Kupplung (12) zu einem Vorratsbehälter (22) strömt und der zweite Teilstrom (i_ATF_2) über einen die Reibbeläge umgehenden Hydraulikpfad (24) zu dem Vorratsbehälter (22) strömt, wobei das Hydrauliksystem (10) dazu eingerichtet ist, eine Kühlung der Kupplung (12) durch zu Lasten des zweiten Teilstroms (i_ATF_2) erfolgendes Vergrößern des ersten Teilstroms (i_ATF_1) aufzusteuern und die Kühlung der Kupplung (12) durch zu Lasten des ersten Teilstroms (i_ATF_1) erfolgendes Vergrößern des zweiten Teilstroms (i_ATF_2) zu verringern, **dadurch gekennzeichnet, dass** das Hydrauliksystem (10) dazu eingerichtet ist, die Kühlung der Kupplung (12) bei einem Umsteuern der Drehmomentübertragung von einer Übertragung über ein erstes Teilgetriebe (TG1) auf eine Übertragung über ein zweites Teilgetriebe (TG2) des Kraftfahrzeuggetriebes (14) vorübergehend aufzusteuern.

2. Hydrauliksystem (10) nach Anspruch 1, **dadurch gekennzeichnet, dass** es dazu eingerichtet ist, eine Kühlung der Kupplung (12) beim Vorwählen einer bestimmten Übersetzung im aktuell kein Drehmoment übertragenden Teilgetriebe (TG1, TG2) abzusteuern oder nicht aufzusteuern.
